# FASCICULE DE BREVET EUROPEEN

(11) **EP 4 402 779 B1**
(45) Date de publication et mention de la délivrance du brevet: **21.05.2025**
(21) Numéro de dépôt: 22802005.3
(22) Date de dépôt: 07.09.2022
(51) Int. Cl.: H02K 3/52

(54) **GUIDE DE BOBINAGE POUR ROTOR DE MACHINE ÉLECTRIQUE**
WICKLUNGSFÜHRUNG FÜR EINEN ROTOR EINES ELEKTROMOTORS
WINDING GUIDE FOR A ROTOR OF AN ELECTRIC MOTOR

(30) Priorité: 14.09.2021 FR 2109605
(43) Date de publication de la demande: 24.07.2024
(73) Titulaire: Ampere SAS, 92100 Boulogne-Billancourt (FR); Nissan Motor Co., Ltd., Kanagawa, 221--0023 (JP)
(72) Inventeur: MOTTE, Emmanuel, 76410 CLEON (FR); VIVAS-MARQUEZ, Daniella, 78084 Guyancourt (FR)
(74) Mandataire: Jacobacci Coralis Harle
(86) Numéro de dépôt international: PCT/EP2022/074916
(87) Numéro de publication internationale: WO 2023/041403

(56) Documents cités:
- EP-A1- 3 046 233
- DE-A1- 102018 128 521
- DE-A1- 102019 211 262
- JP-A- 2000 341 896
- KR-U- 20000 016 311
- US-A1- 2021 257 873
- US-B2- 9 712 027

## Description

### DOMAINE TECHNIQUE DE L'INVENTION

La présente invention concerne de manière générale les machines électriques.

Elle concerne plus particulièrement un guide de bobinage pour rotor de machine électrique, comprenant :
- une embase sensiblement circulaire autour d'un axe longitudinal,
- des dents qui s'élèvent radialement à partir de l'embase, et
- des têtes qui s'étendent aux extrémités libres des dents et qui débordent des dents, en porte-à-faux.

Elle concerne également un rotor comprenant un tel guide de bobinage, une machine électrique comprenant un tel rotor et un véhicule automobile comprenant une telle machine électrique.

L'invention trouve une application particulièrement avantageuse dans la réalisation de machines électriques synchrones à rotor bobiné, et notamment de moteurs de traction pour véhicules automobiles.

### ETAT DE LA TECHNIQUE

Une machine électrique telle qu'un moteur comprend généralement un rotor et un stator. Le rotor est une pièce mobile qui tourne, alors que le stator est une pièce fixe.

La vitesse de rotation d'un rotor dans un moteur de traction de véhicule automobile dépasse les 10 000 tours par minute, ce qui génère de fortes contraintes mécaniques.

Un rotor de type bobiné permettant de résister à de telles contraintes est décrit par exemple dans le document WO2020020551.

Dans ce document, le rotor comporte un arbre qui tourne autour de son axe, et un empilement de tôles montées coaxialement sur l'arbre. Ces tôles forment un châssis qui comprend un corps tubulaire et des pôles magnétiques qui s'étendent en saillie radiale par rapport à ce corps.

Un bobinage de fil électrique est alors prévu pour être enroulé autour de chaque pôle. Pour faciliter l'enroulement automatique de ce fil électrique autour de chaque pôle, il est prévu, à chaque extrémité de la superposition de tôles, un guide de bobinage.

Ces guides comportent chacun une embase circulaire (s'étendant dans le prolongement du corps tubulaire), des dents qui s'élèvent à partir de l'embase circulaire (dans le prolongement des pôles) et qui portent chacune une tête en porte-à-faux. Le fil électrique est prévu pour s'enrouler autour de chaque dent et du pôle correspondant. Les têtes facilitent le bobinage du fil électrique et elles permettent de retenir radialement les bobinages lorsque le rotor tourne.

Les formes des guides de bobinage sont conçues de telle sorte que le fil électrique puisse être bobiné automatiquement autour des pôles et des dents, en se positionnant correctement.

En règle générale, l'idée consiste à enrouler le fil électrique de façon à ce que les spires se positionnent côte-à-côte dans tout l'espace qui leur est alloué, et se superposent sur plusieurs couches.

Ainsi, l'arrangement des spires est conditionné par la dimension radiale de l'espace alloué, lequel est délimité entre la tête et l'embase de chaque dent du guide de bobinage.

L'idéal serait que cette dimension radiale soit constante dans tout l'espace alloué, pour que les couches de spires disposent toutes du même espace pour se ranger.

Cet objectif n'est actuellement pas rempli lorsque le guide de bobinage est réalisé en matière plastique par une opération d'injection.

Une telle méthode de fabrication par injection s'opère en effet à l'aide de moules dont les formes doivent être conçues pour permettre le démoulage des guides de bobinage.

Pour cela, aucune face du guide de bobinage n'est d'équerre, ce qui empêcherait sinon ce démoulage. Les faces des têtes des guides de bobinage actuellement connus sont au contraire légèrement inclinées pour assurer ce démoulage, on parle à ce sujet d'angle de dépouille.

Malheureusement, ces angles, quoique réduits, génèrent des défauts d'enroulement du fil électrique. En effet, l'angle de dépouille provoque un élargissement de l'espace de réception du fil électrique, si bien qu'on constate que les spires de fil électrique se superposent de façon aléatoire dans l'espace qui leur est alloué.

On comprend que tout décalage des spires entraîne ensuite une réduction des performances de la machine électrique.

Un rotor de type bobiné permettant de résister à des forces centrifuges de haute intensité est décrit dans le document KR 2000 0016311 U.

### PRESENTATION DE L'INVENTION

Afin de remédier à l'inconvénient précité de l'état de la technique, la présente invention propose non pas de réaliser les guides de bobinage au moyen d'une autre méthode de fabrication, mais plutôt de concevoir des guides de manière à prendre en considération le défaut précité de la méthode de fabrication par injection.

Plus particulièrement, on propose selon l'invention un guide de bobinage tel que défini dans l'introduction, dans lequel il est prévu qu'au moins une des têtes présente une face intérieure qui est tournée vers l'embase et qui comprend :
- une portion principale plane qui est inclinée d'un premier angle (de dépouille) strictement supérieur à 0 degré par rapport à l'axe longitudinal, et
- des nervures qui s'étendent en saillie de la portion principale et dont les sommets sont plats et inclinés par rapport à l'axe longitudinal d'un second angle compris dans un intervalle dont la borne inférieure, incluse dans l'intervalle, est de zéro degré et dont la borne supérieure, exclue de l'intervalle, est égal au premier angle.

Ainsi, l'idée consiste à réduire très localement l'angle de dépouille nécessaire au démoulage au niveau de petites surfaces étroites (les sommets des nervures) sur lesquelles le fil électrique pourra s'appuyer, tout en laissant la majeur partie de la face intérieure de cette tête inclinée avec un angle de dépouille suffisant pour permettre le démoulage de la pièce.

En d'autres termes, grâce à l'invention, les nervures de petites dimensions ne présentent pas ou peu d'angle de dépouille, mais présentent des dimensions suffisamment petites pour ne pas former obstacle au démoulage. Grâce à ces nervures, l'espace de bobinage délimité entre l'embase et les sommets de ces nervures présente une largeur constante, ce qui assure un meilleur rangement des spires de fil électrique.

D'autres caractéristiques avantageuses et non limitatives du guide de bobinage conforme à l'invention, prises individuellement ou selon toutes les combinaisons techniquement possibles, sont les suivantes :
- le premier angle est supérieur à 1 degré, et il est de préférence compris entre 1,5 et 2,5 degrés ;
- le second angle est inférieur à 0,5 degré, et de préférence compris entre 0 et 0,2 degré ;
- la tête s'étendant d'un côté de la dent et présentant un premier bord rattaché à la dent et un second bord libre opposé, lesdites nervures s'étendent en longueur, pour au moins une partie d'entre elles, depuis le premier bord en direction du second bord ;
- lesdites nervures présentent une épaisseur qui est sensiblement nulle au niveau du premier bord ;
- lesdites nervures s'étendent parallèlement les unes aux autres ;
- lesdites nervures sont distantes entre elles d'un écart inférieur à trois fois le diamètre du fil électrique à bobiner autour de la dent ;
- il est prévu des butées qui s'élèvent à partir de l'embase, sensiblement en parallèle des têtes pour délimiter avec celles-ci des espaces d'enroulement d'un fil électrique ;
- au moins une desdites butées présente une face extérieure comportant une portion principale qui est inclinée d'un troisième angle strictement supérieur à 0 degré par rapport à l'axe longitudinal, et au moins une nervure qui s'étend en saillie de la portion principale et dont le sommet est plat et incliné par rapport à l'axe longitudinal d'un quatrième angle compris entre zéro degré inclus et le troisième angle exclu.

L'invention concerne également un rotor pour machine électrique comprenant un châssis qui comporte :
- répartis autour d'un axe longitudinal, des éléments à pôles magnétiques séparés deux à deux par des gorges,
- à au moins une de ses extrémités, un guide de bobinage tel que précité, dont les dents s'étendent dans le prolongement des éléments à pôles magnétiques, et
- une bobine de fil électrique conducteur enroulée autour de chaque élément à pôles magnétiques et de la dent correspondante.

Elle concerne aussi une machine électrique comprenant un stator et un rotor tel que précité.

Elle concerne enfin un véhicule automobile comportant des roues et un groupe motopropulseur pour entraîner en rotation une partie au moins desdites roues, qui comporte une machine électrique telle que précité.

Bien entendu, les différentes caractéristiques, variantes et formes de réalisation de l'invention peuvent être associées les unes avec les autres selon diverses combinaisons dans la mesure où elles ne sont pas incompatibles ou exclusives les unes des autres.

### DESCRIPTION DETAILLEE DE L'INVENTION

La description qui va suivre en regard des dessins annexés, donnés à titre d'exemples non limitatifs, fera bien comprendre en quoi consiste l'invention et comment elle peut être réalisée.

Sur les dessins annexés :
[Fig. 1] est une vue schématique en perspective d'un châssis de rotor de machine électrique conforme à l'invention ;
[Fig. 2] est une vue schématique d'une partie d'un guide de bobinage du châssis de la figure 1 ;
[Fig. 3] est une vue en coupe selon le plan A-A de la figure 2 ;
[Fig. 4] est une vue de face du rotor de la figure 1.

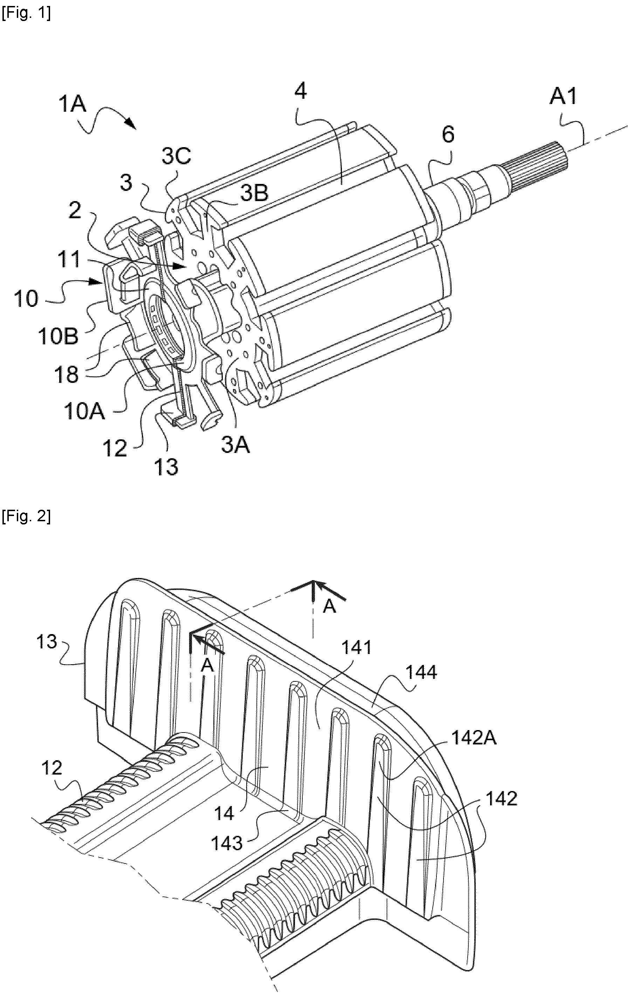

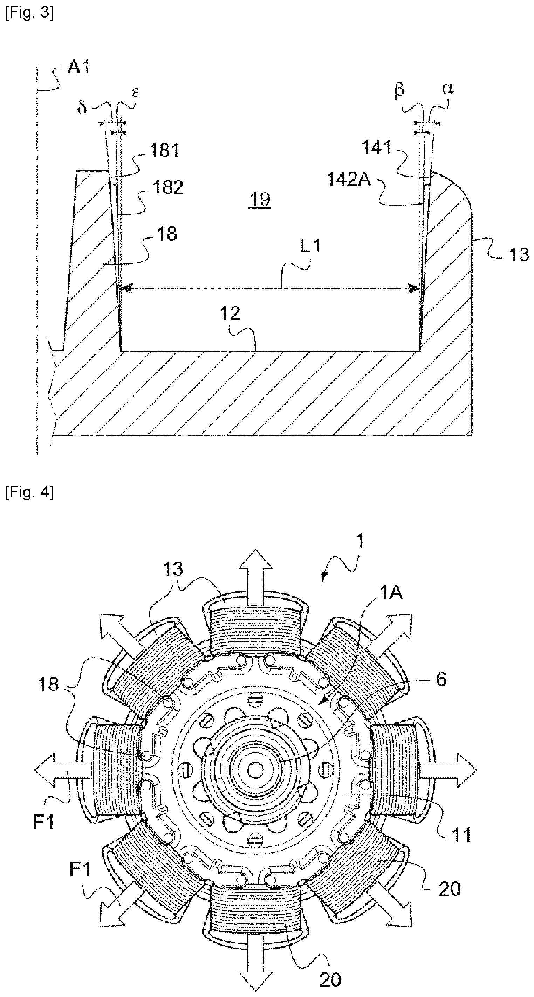

Sur les figures 1 et 4, on a représenté une partie d'une machine électrique.

Cette machine électrique pourrait être une génératrice de courant. En l'espèce, il s'agit ici plutôt d'un moteur de traction de véhicule automobile, lequel moteur peut éventuellement avoir une fonction de génératrice dans certains modes de fonctionnement du véhicule.

Ce moteur fait donc partie d'un groupe motopropulseur installé sur le châssis d'une véhicule automobile et couplé aux roues de ce véhicule.

Ce moteur comporte différents composants, parmi lesquels un carter qui loge un stator et un rotor. Si le stator est fixe dans le carter, le rotor est monté mobile en rotation autour d'un axe longitudinal A1.

Le rotor est du type bobiné (voir figure 4). Il comporte donc un châssis 1A et des bobines 20 de fil électrique enroulées sur le châssis 1A.

Le châssis 1A est illustré sur la figure 1.

Ce châssis 1A comporte un arbre 6 monté rotatif autour de l'axe longitudinal A1. Il comporte également un empilement 2 de tôles identiques, montées coaxialement sur l'arbre.

Les tôles de cet empilement 2 s'étendent dans un plan radial perpendiculaire à l'axe longitudinal A1. Dans ce plan radial, les tôles ont toutes un contour identique, avec un corps 3A en forme de disque percé pour le passage de l'arbre 6, et des pôles saillants qui sont répartis régulièrement autour de l'axe longitudinal A1.

Les tôles sont montées par frettage sur la surface externe de l'arbre 6 du rotor, de façon à ce que leurs pôles saillants se superposent dans le prolongement les uns des autres et forment des « pôles 3 ».

Dans l'exemple de réalisation représenté, l'empilement 2 comporte huit pôles 3. Toutefois, il pourrait comporter un nombre de pôles différent, supérieur ou au moins égal à deux.

Chaque pôle 3 présente une forme de champignon, avec un pied 3B qui s'étend radialement vers l'extérieur du rotor, et un chapeau 3C qui forme deux nervures saillant latéralement de part et d'autre du pied 3B. La fonction des nervures 3C est notamment de retenir dans la direction radiale un bobinage de fil électriquement conducteur (lequel sera décrit plus en détail dans la suite de cet exposé), malgré la force centrifuge subie par ce bobinage lors de la rotation du rotor 1.

Il est par ailleurs prévu, à au moins une des extrémités de cet empilement 2, un élément différent des tôles de l'empilement 2, ici appelée « guide de bobinage 10 ».

Il est préférentiellement prévu deux guides de bobinage 10 identiques aux deux extrémités de l'empilement 2 de tôles, mais un seul d'entre eux sera ici décrit.

Chaque guide de bobinage 10 est essentiellement prévu pour faciliter l'enroulement du fil électrique autour des pôles 3.

Chaque guide de bobinage 10 a, dans l'exemple représenté sur la figure 1, la particularité d'être constitué d'une âme métallique 10A surmoulée par une structure en plastique 10B.

En variante, et de manière même préférentielle, il pourrait être réalisé d'une seule pièce en matière plastique.

Sur la figure 1, pour illustrer l'âme métallique 10A, on a représenté une moitié seulement de la structure de plastique 10B.

L'âme métallique 10A du flasque de guidage 10 présente une forme homologue à celle des tôles de l'empilement 2, avec une embase circulaire percée pour le passage de l'arbre 6, qui s'étend dans un plan radial perpendiculaire à l'axe longitudinal A1 de l'arbre du rotor, et des pôles saillants. Toutefois, ici, ces pôles saillants présentent des formes de languettes repliées à angle droit vers l'avant.

A ce stade, on peut définir l'avant du rotor comme le côté sur lequel se trouve le guide de bobinage 10 considéré. L'arrière sera le côté opposé. Le terme « interne » ou « intérieur » désignera le côté tourné vers l'axe longitudinal A1 et le terme « externe » ou « extérieur » désignera le côté opposé.

Comme le montrent les figures 1 et 2, la structure en plastique 10B forme avec l'âme métallique 10A une embase 11 circulaire et des dents 12 qui s'élèvent radialement par rapport à l'embase 11. Elle forme en outre, à l'extrémité de chaque dent 12, une tête 13 qui déborde de part et d'autre des dents 12 et vers l'avant.

Les dents 12 et les têtes 13 sont ici toutes identiques mais peuvent être asymétriques entre le coté avant et opposé. On ne décrira donc qu'une seule de ces dents et une seule de ces têtes, en référence à la figure 2.

On observe sur cette figure 2 que la dent 12 présente une section (dans un plan orthogonal à l'axe radial selon lequel s'élève la dent) de forme globalement rectangulaire, avec deux arêtes avant arrondies. Ces arêtes arrondies sont striées de façon à guider la première couche de spires de fil électrique qui sera enroulée autour de la dent 12.

La tête 13 s'étend ici à l'extrémité libre de la dent 12, et elle déborde à l'avant et sur les côtés latéraux de celle-ci, en porte-à-faux. En d'autres termes, la tête 13 qui présente une forme de plaque sensiblement plane et rectangulaire s'étend sensiblement dans un plan orthogonal à l'axe radial de la dent 12.

Chaque tête 13 présente alors une face interne 14 située en regard de l'embase 11.

De son côté, comme le montrent les figures 3 et 4, l'embase 11 porte des butées 18, dont deux d'entre elles s'étendent en vis-à-vis de chaque tête 13 afin de délimiter avec celle-ci un espace de bobinage 19. La figure 4 illustre bien les bobines 20 de fils électriques enroulées dans cet espace de bobinage, entre les butées 18 et les têtes 13.

L'objectif de l'invention est que la largeur de cet espace de bobinage 19 (mesuré radialement par rapport à l'axe longitudinal A1) soit sensiblement constante sur toute la hauteur de l'espace (la hauteur étant mesurée axialement).

Un autre objectif est que le guide de bobinage puisse être réalisé en plastique pour faciliter l'isolation électrique des fils et éviter leur endommagement. Le procédé de fabrication le plus répandu des plastiques est le moulage par injection, que l'on souhaite pouvoir employer. Il est ici prévu pour être réalisé dans un moule en deux parties qui se séparent en les écartant selon un axe parallèle à l'axe longitudinal A1.

Pour atteindre ces deux objectifs, la face interne 14 de la tête 13 n'est pas d'équerre par rapport à la dent 12 (elle présente un angle de dépouille non nul) et elle n'est pas parfaitement plane.

Sa face intérieure 14 présente plus précisément une majeure partie, appelée portion principale 141 (voir figure 2), qui est plane qui est inclinée d'un angle de dépouille α non-nul par rapport à l'axe longitudinal, et des nervures 142 qui s'étendent en saillie de la portion principale 141 et dont les sommets 142A sont plats et inclinés par rapport à l'axe longitudinal A1 d'un petit angle β compris entre 0 (inclus) et l'angle de dépouille α (exclu).

L'angle de dépouille α est orienté de telle sorte que la tête 13 s'affine depuis le bord 143 de la tête 13 qui est rattaché à la dent 12 vers le bord libre 144 opposé. Le petit angle β est orienté de la même façon.

De manière préférentielle, comme le montre la figure 3, l'angle de dépouille α est supérieur à 1,5 degrés et de l'ordre de 2 degrés. Un tel angle permet de faciliter le démoulage du guide de bobinage.

De son côté, le petit angle β est inférieur ou égal à 0,5 degré, et de préférence de l'ordre de 0 à 0,2 degrés. Ce petit angle est tel que l'espace de bobinage 19 présente une largeur sensiblement constante sur toute sa hauteur, ce qui assure un bobinage du fil électrique selon la forme souhaitée.

En pratique, comme le montre la figure 2, les nervures 142 sont toutes identiques et parallèles les unes aux autres. Elles s'étendent en longueur depuis le bord 143 de la tête 13 qui est rattaché à la dent 12 (ou à hauteur de ce bord), vers le bord opposé 144 de la tête.

Elles s'étendent sur une largeur réduite, inférieure à la distance qui les sépare les unes des autres. Cette largeur est d'environ 3 mm lorsque la largeur totale de la tête est de l'ordre de 40 à 60 mm.

Elles présentent une épaisseur sensiblement nulle au niveau du bord 143 de la tête 13 (celui situé du côté de la dent 12). Cette épaisseur croît linéairement vers le bord libre 144 de la tête 13.

Les bords des nervures ne sont pas droits mais présentent également des angles de dépouille prononcés.

Les nervures 142 sont situées à distance les unes des autres. Cette distance est au plus égale à trois fois le diamètre du fil électrique bobiné, ce qui évite que ce dernier puisse se courber entre les nervures. Elle est de préférence comprise entre deux et trois fois ce diamètre.

Le rapport de la surface occupée par les nervures 142 sur la surface totale de la face interne 14 de la dent 13 est de préférence supérieur à 50%.

On notera toutefois que l'espace entre les nervures (et donc ce rapport) dépend sensiblement du diamètre du fil avec lequel est fait le bobinage.

De l'autre côté de l'espace de bobinage 19 par rapport à la tête 13, il est prévu deux butées 18 qui, comme le montre la figure 4, présentent ici des formes de plots. Ces butées pourraient bien entendu présenter des formes différentes (la figure 1 représente par exemple une variante de réalisation du guide dans laquelle les butées présentent des formes de parois plutôt que de plots).

Dans le mode de réalisation préféré qui est illustré sur les figures 3 et 4, les plots présentent ici des formes tronconiques, d'angle au sommet réduits. Comme le montre la figure 3, chaque plot présente ainsi un côté 181 orienté vers la tête 13 qui est incliné d'un angle δ par rapport à l'axe longitudinal A1 au moins égal à l'angle de dépouille α.

Une nervure 182 s'élève en saillie sur ce côté 181 du plot. Elle présente ici une forme identique à celle des nervures 142 de la tête 13. Cette nervure 182 présente donc un sommet plat qui est incliné par rapport à l'axe longitudinal A1 d'un angle ε réduit, préférentiellement compris entre 0 et 0,5 degré (bornes incluses).

De cette manière, comme l'illustre bien la figure 3, l'espace de bobinage 19 présente une largeur L1 qui augmente très peu depuis la dent 12 vers l'avant.

L'assemblage du rotor 1 consiste alors à positionner deux guides de bobinage 10 aux extrémités des tôles du châssis 1A, de telle sorte que leurs dents 12 s'étendent dans le prolongement des pôles 3, puis à enrouler le fil électrique de manière qu'il forme une bobine 20 autour de chaque paire de dents 12 opposées axialement et du pôle situé entre ces dents 12.

Lors de cet enroulement, les spires du fil électrique se positionnent automatiquement côte-à-côte, sur plusieurs couches. Du fait des valeurs réduites des angles β et ε, la largeur L1 dont dispose chaque couche de spires varie peu, ce qui permet d'assurer un enroulement automatique fiable du fil électrique.

En fonctionnement, le rotor tourne à une vitesse élevée, si bien que les bobines 20 sont soumises à des forces centrifuges F1 de haute intensité (voir figure 4). Le bobinage bien réalisé permet à une couche sur deux de fil électrique de s'appuyer sur la tête 13 du guide de bobinage 10, ce qui assure alors un maintien solide des bobines 20 de fil électrique.

La présente invention n'est nullement limitée au mode de réalisation décrit et représenté, mais l'homme du métier saura y apporter toute variante conforme à l'invention.

A titre d'exemple, on pourrait prévoir que les nervures ne soient pas parallèles entre elles, ou qu'elles diffèrent les unes des autres, ou qu'elles présentent des largeurs variables.

## Revendications

1. Guide de bobinage (10) pour rotor de machine électrique, comprenant :
- une embase (11) sensiblement circulaire autour d'un axe longitudinal (A1),
- des dents (12) qui s'élèvent radialement à partir de l'embase (11), et
- des têtes (13) qui s'étendent aux extrémités libres des dents (12) et qui débordent des dents (12), en porte-à-faux,
dans lequel au moins une desdites têtes (13) présente une face intérieure (14) qui est tournée vers l'embase (11) et qui comporte :
- une portion principale (141) plane inclinée d'un premier angle (α) strictement supérieur à 0 degré par rapport à l'axe longitudinal (A1), **caractérisé en ce que**
- des nervures (142) qui s'étendent en saillie de la portion principale (141) et dont les sommets (142A) sont plats et inclinés par rapport à l'axe longitudinal (A1) d'un second angle (β) compris entre zéro degré inclus et le premier angle (α) exclu.

2. Guide de bobinage (10) selon la revendication précédente, dans lequel le premier angle (α) est supérieur à 1 degré, et de préférence compris entre 1,5 et 2,5 degrés.

3. Guide de bobinage (10) selon l'une des revendications précédentes, dans lequel le second angle (β) est inférieur à 0,5 degré, et de préférence compris entre 0 et 0,2 degré.

4. Guide de bobinage (10) selon l'une des revendications précédentes, dans lequel la tête (13) s'étendant d'un côté de la dent (12) et présentant un premier bord (143) rattaché à la dent (12) et un second bord (144) libre opposé, lesdites nervures (142) s'étendent en longueur, pour au moins une partie d'entre elles, depuis le premier bord (143) en direction du second bord (144).

5. Guide de bobinage (10) selon la revendication précédente, dans lequel lesdites nervures (142) présentent une épaisseur sensiblement nulle au niveau du premier bord (143).

6. Guide de bobinage (10) selon l'une des revendications précédentes, dans lequel lesdites nervures (142) s'étendent parallèlement les unes aux autres.

7. Guide de bobinage (10) selon la revendication précédente, dans lequel lesdites nervures (142) sont distantes entre elles d'un écart inférieur à trois fois le diamètre d'un fil électrique à bobiner autour de la dent (12).

8. Guide de bobinage (10) selon l'une des revendications précédentes, dans lequel il est prévu des butées (18) qui s'élèvent à partir de l'embase (11), sensiblement en parallèle des têtes (13) pour délimiter avec celles-ci des espaces d'enroulement d'un fil électrique, et dans lequel au moins une desdites butées (18) présente une face extérieure comportant un côté (181) qui est incliné d'un troisième angle (δ) strictement supérieur à 0 degré par rapport à l'axe longitudinal (A1), et au moins une nervure (182) qui s'étend en saillie de ce côté (181) et dont le sommet est plat et incliné par rapport à l'axe longitudinal (A1) d'un quatrième angle (ε) compris entre zéro degré inclus et le troisième angle exclu.

9. Rotor (1) pour machine électrique comprenant un châssis (1A) qui comporte, répartis autour d'un axe longitudinal (A1), des éléments à pôles magnétiques (3) séparés deux à deux par des gorges (4), **caractérisé en ce que** le châssis (1A) comporte, à au moins une de ses extrémités, un guide de bobinage (10) conforme à l'une des revendications précédentes, dont les dents (12) s'étendent dans le prolongement des éléments à pôles magnétiques (3), et **en ce qu'**il comporte une bobine (20) de fil électrique conducteur enroulée autour de chaque élément à pôles magnétiques (3) et de la dent (12) correspondante.

10. Machine électrique comprenant un stator, **caractérisé en ce qu'**il comporte un rotor (1) conforme à la revendication précédente.

11. Véhicule automobile comportant des roues et un groupe motopropulseur pour entraîner en rotation une partie au moins desdites roues, **caractérisé en ce que** le groupe motopropulseur comporte une machine électrique conforme à la revendication précédente.

## Patentansprüche

1. Wicklungsführung (10) für den Rotor einer elektrischen Maschine, umfassend:
- eine im Wesentlichen kreisförmige Basis (11) um eine Längsachse (A1),
- Zähne (12), die sich radial von der Basis (11) erheben, und
- Köpfe (13), die sich an den freien Enden der Zähne (12) erstrecken und freitragend über die Zähne (12) hinausragen,
wobei mindestens einer der Köpfe (13) eine Innenseite (14) aufweist, die zur Basis (11) gedreht ist und die Folgendes enthält:
- einen flachen Hauptabschnitt (141), der um einen ersten Winkel (α), der strikt größer als 0 Grad ist, in Bezug auf die Längsachse (A1) geneigt ist, **dadurch gekennzeichnet, dass**
- Rippen (142), die sich vorspringend von dem Hauptabschnitt (141) erstrecken und deren Scheitelpunkte (142A) flach und in Bezug auf die Längsachse (A1) um einen zweiten Winkel (β) zwischen null Grad eingeschlossen und dem ausgeschlossenen ersten Winkel (α) geneigt sind.

2. Wicklungsführung (10) nach dem vorhergehenden Anspruch, wobei der erste Winkel (α) größer als 1 Grad ist und vorzugsweise zwischen 1,5 und 2,5 Grad beträgt.

3. Wicklungsführung (10) nach einem der vorhergehenden Ansprüche, wobei der zweite Winkel (β) kleiner als 0,5 Grad ist und vorzugsweise zwischen 0 und 0,2 Grad beträgt.

4. Wicklungsführung (10) nach einem der vorhergehenden Ansprüche, wobei sich der Kopf (13) von einer Seite des Zahns (12) aus erstreckt und eine erste Kante (143), die mit dem Zahn (12) verbunden ist, und eine zweite gegenüberliegende, freie Kante (144) aufweist, wobei sich die Rippen (142) bei mindestens einem Teil von ihnen in der Länge von der ersten Kante (143) in Richtung der zweiten Kante (144) erstrecken.

5. Wicklungsführung (10) nach dem vorhergehenden Anspruch, wobei die Rippen (142) an der ersten Kante (143) eine Dicke von im Wesentlichen null aufweisen.

6. Wicklungsführung (10) nach einem der vorhergehenden Ansprüche, wobei sich die Rippen (142) parallel zueinander erstrecken.

7. Wicklungsführung (10) nach dem vorhergehenden Anspruch, wobei die Rippen (142) in einem Abstand von weniger als dem Dreifachen des Durchmessers eines um den Zahn (12) zu wickelnden elektrischen Drahts voneinander entfernt sind.

8. Wicklungsführung (10) nach einem der vorhergehenden Ansprüche, wobei Anschläge (18) vorgesehen sind, die sich von der Basis (11) ausgehend, im Wesentlichen parallel zu den Köpfen (13), erheben, um mit diesen Wicklungsräume eines elektrischen Drahts abzugrenzen, und wobei mindestens einer der Anschläge (18) eine Außenfläche aufweist, die eine Seite (181), die um einen dritten Winkel (δ), der strikt größer als 0 Grad ist, in Bezug auf die Längsachse (A1) geneigt ist, und mindestens eine Rippe (182) enthält, die sich vorspringend von dieser Seite (181) erstreckt und deren Scheitelpunkt flach und in Bezug auf die Längsachse (A1) um einen vierten Winkel (ε) zwischen null Grad eingeschlossen und dem ausgeschlossen dritten Winkel geneigt ist.

9. Rotor (1) für eine elektrische Maschine, der einen Rahmen (1A) umfasst, der um eine Längsachse (A1) verteilte Magnetpolelemente (3) enthält, die paarweise durch Nuten (4) getrennt sind, **dadurch gekennzeichnet, dass** der Rahmen (1A) an mindestens einem seiner Enden eine Wicklungsführung (10) nach einem der vorhergehenden Ansprüche enthält, deren Zähne (12) sich in der Verlängerung der Magnetpolelemente (3) erstrecken, und dadurch, dass er eine Spule (20) aus leitendem elektrischem Draht enthält, die um jedes Magnetpolelement (3) und den entsprechenden Zahn (12) gewickelt ist.

10. Elektrische Maschine, die einen Stator umfasst, **dadurch gekennzeichnet, dass** sie einen Rotor (1) gemäß dem vorhergehenden Anspruch umfasst.

11. Kraftfahrzeug, das Räder und einer Antriebseinheit zum rotierenden Antrieb mindestens eines Teils der Räder enthält, **dadurch gekennzeichnet, dass** die Antriebseinheit eine elektrische Maschine gemäß dem vorhergehenden Anspruch enthält.

## Claims

1. Winding guide (10) for an electric-machine rotor, comprising:
- a base (11) substantially circular around a longitudinal axis (A1),
- teeth (12) that rise radially from the base (11), and
- heads (13) extending at the free ends of the teeth (12) and protruding from the teeth (12), in overhang,
wherein at least one of said heads (13) has an inner face (14) which is turned towards the base (11) and which includes:
- a planar main portion (141) inclined by a first angle (α) strictly greater than 0 degrees with respect to the longitudinal axis (A1), **characterised in that**
- ribs (142) which extend protruding from the main portion (141) and the vertices (142A) of which are flat and inclined with respect to the longitudinal axis (A1) by a second angle (β) between zero degrees inclusive and the first angle (α) exclusive.

2. Winding guide (10) according to the preceding claim, wherein the first angle (α) is greater than 1 degree, and preferably between 1.5 and 2.5 degrees.

3. Winding guide (10) according to one of the preceding claims, wherein the second angle (β) is less than 0.5 degrees, and preferably between 0 and 0.2 degrees.

4. Winding guide (10) according to one of the preceding claims, wherein the head (13) extending on one side of the tooth (12) and having a first edge (143) attached to the tooth (12) and an opposite free second edge (144), said ribs (142) extend in length, for at least a portion thereof, from the first edge (143) toward the second edge (144).

5. Winding guide (10) according to the preceding claim, wherein said ribs (142) have a substantially zero thickness at the first edge (143).

6. Winding guide (10) according to one of the preceding claims, wherein said ribs (142) extend parallel to one another.

7. Winding guide (10) according to the preceding claim, wherein said ribs (142) are spaced apart by a distance of less than three times the diameter of an electrical wire to be wound around the tooth (12).

8. Winding guide (10) according to one of the preceding claims, wherein stops (18) are provided which rise from the base (11), substantially parallel to the heads (13) to delimit with them winding spaces for an electrical wire, and wherein at least one of said stops (18) has an outer face including a side (181) which is inclined by a third angle (δ) strictly greater than 0 degrees with respect to the longitudinal axis (A1), and at least one rib (182) which extends protruding on this side (181) and the top of which is flat and inclined with respect to the longitudinal axis (A1) by a fourth angle (ε) between zero degrees inclusive and the third angle exclusive.

9. Rotor (1) for an electric machine comprising a frame (1A) which includes, distributed around a longitudinal axis (A1), elements with magnetic poles (3) separated two by two by grooves (4), **characterised in that** the frame (1A) includes, at at least one of its ends, a winding guide (10) according to one of the preceding claims, the teeth (12) of which extend in line with the elements with magnetic poles (3), and **in that** it includes a coil (20) of conductive electrical wire wound around each magnetic pole element (3) and the corresponding tooth (12).

10. Electric machine comprising a stator, **characterised in that** it comprises a rotor (1) according to the preceding claim.

11. Motor vehicle including wheels and a powertrain for rotatingly driving at least some of said wheels, **characterised in that** the powertrain comprises an electric machine according to the preceding claim.
